# EUROPÄISCHE PATENTANMELDUNG

(11) **EP 1 057 407 A1**
(43) Veröffentlichungstag der Anmeldung: **06.12.2000**
(21) Anmeldenummer: 00111699.5
(22) Anmeldetag: 31.05.2000
(51) Int. Cl.: A01N 37/10

(54) **Mittel zur Entkeimung verkeimungsgefährdeter Gegenstände**

(30) Priorität: 02.06.1999 DE 19925425
(71) Anmelder: Arconia GmbH, 7002 Chur (CH)
(72) Erfinder: Kern, Ralf M., 82057 Icking bei München (DE)
(74) Vertreter: Kern, Ralf M., Dipl.-Ing.

(57) **Zusammenfassung**

Die Erfindung betrifft ein Mittel zur Entkeimung bzw. keimreduzierenden Behandlung von Reinigungs-, Sanitär- und Toilettenartikeln, Körperpflegeartikeln sowie kosmetischen Artikeln und dergleichen verkeimungsgefährdeten Gegenständen wie auch Geräte auf dem Gebiet verderblicher Waren, sowie die Verwendung dieses Entkeimungsmittels als Reinigungsmittel und zum Schutz von Oberflächen jeglicher Art gegen Verkeimung.

Überraschenderweise wird diese Funktion mit einem Mittel aus einem oder mehreren Lebensmittel-Konservierungsstoffen sowie mindestens einer nicht-toxischen, insbesondere organischen Säure gewährleistet.

## Beschreibung

Die Erfindung betrifft ein Mittel zur Entkeimung bzw. keimreduzierenden Behandlung von Reinigungs-, Sanitär- und Toilettenartikeln, Körperpflegeartikeln sowie kosmetischen Artikeln und dergleichen verkeimungsgefährdeten Gegenständen wie auch Geräte auf dem Gebiet verderblicher Waren, sowie die Verwendung dieses Entkeimungsmittels als Reinigungsmittel und zum Schutz von Oberflächen jeglicher Art gegen Verkeimung.

Gerade im Reinigungs- und Körperpflegebereich besteht eine ständige Gefahr von Verkeimungen bzw. Wiederverkeimungen, und zwar auch dann, wenn die verwendeten Reinigungs- und Körperpflegemittel bzw. kosmetischen Mittel selbst eigentlich keimfrei erscheinen. Eine ständige Wiederverkeimung liegt aber in der Natur ihrer Verwendung und kann auch nur in einer Form vermieden werden, bei der von den Reinigungs-, Toiletten- und kosmetischen Artikeln selbst eine ständige Entkeimungs- bzw. entkeimende Wirkung ausgeht. Ähnliches gilt auch für Geräte auf dem Gebiet verderblicher Waren wie Handhabungswerkzeuge und Gehäuse dafür.

Dabei muß, insbesondere für die Körperhygiene, die Entkeimung nicht nur umweltschonend und völlig biologisch abbaubar, sondern haut- bzw. schleimhautschonend und gänzlich untoxisch und keine allergischen Reaktionen auslösend sein.

Überraschenderweise werden diese Anforderungen von Artikeln der vorgenannten Art erfindungsgemäß völlig zufriedenstellend dann erfüllt, wenn sie mit einem Mittel versehen, besprüht, beschichtet bzw. imprägniert sind, welches einen oder mehrere Lebensmittel-Konservierungsstoffe sowie mindestens eine nicht-toxische, insbesondere organische Säure aufweist.

Aufgabengemäß entkeimt dieses erfindungsgemäße Mittel nicht nur den Gegenstand, der mit ihm versehen bzw. behandelt ist selbst, sondern seine Entkeimungs- bzw. keimreduzierende Wirkung wird sogar bis zur Erschöpfung seiner Entkeimungswirkung auf den mit ihm behandelten Gegenstand übertragen.

Vom Schutzumfang der Erfindung sind beispielsweise Waschmittel, Reinigungs- und Putzmittel sowie Fettentfernungsmittel, Seifen (flüssig und fest), Mittel zur Körper- und Schönheitspflege, wie Salben, Gelees, Cremes, Öle, Fettcremes und Salben jeglicher Art, Lotions, auch Hautschutzmittel, Gele und Alginate, Sonnenschutzmittel (auch als Öle), Shampoos, Puder und Schminkmittel, Haar- und Toilettewasser, Monatsbinden bzw. Intimbereichsartikel, Windeln und Windeleinlagen, Babyfeuchttücher, Zellstofftücher. Auch Artikel des übrigen Sanitärbereiches wie Toilettensteine und Toilettenspülwasser, Handtücher, Reinigungswasser, -tücher und -gegenstände und dergleichen wie auch Damenmonatshygiene, Binden und Tampons gehören dazu, auch Perlatoren und Duschschläuche, oder der Medizin, Hilfsmittel wie Verbandsmittel, Watte, Pflaster und dergleichen Gegenstände aus dem medizinischen Bereich wie Zahnfüllmittel, Spül- bzw. Bohrwasser in der Oralmedizin, auch z. B. Kaugummi. Auch Handhabungsgeräte wie Gehäuse, Behälter, Schneidgeräte können auf diese Weise mit entkeimender Wirkung versehen werden, wobei auch ins Innere der damit in Berührung kommenden verderblichen Waren keine Keime übertragen werden (z. B. Schnittbrot bzw. Schnittware).

Das Mittel ist mit besonders überraschenden wirkungsvollen Vorteilen auch als Reinigungsmittel für jegliche Verwendung oder als Zusatz dazu sowie als Zusatz zu Waschvorgängen von z. B. auch frisch geschorener Tierwolle einsetzbar und ferner zur Reinigung von Oberflächen jeglicher Art mit gleichzeitiger Entkeimungswirkung einsetzbar.

Von der Erfindung umfasst ist das erfindungsgemäße Mittel auch zur Beaufschlagung, z. B. Imprägnierung der erfindungsgemäßen Gegenstände, wobei es zugleich auch stark desodorierend bzw. geruchsmindern wirkt.

Überraschenderweise ist ein solches Mittel erfindungsgemäß in bei niedriger Konzentration synergistisch wirksamer Form mit einer Kombination aus einem oder mehreren Lebensmittel-Konservierungsstoffen mit mindestens einer nicht-toxischen, insbesondere organischen Säure gegeben, wobei in vergleichsweise geringer Konzentration in Wasser mit Trinkwasserklasse 0 eine ausreichend entkeimende bzw. keimreduzierende Wirkung schon ab einer Konzentration von 0,005 % bis 0,02 % in Wasser eintritt.

Konkreterweise besteht das Mittel aus rein biologischen Bestandteilen, nämlich einer Kombination einer oder mehrerer Verbindungen aus der Gruppe der Verbindungen Citronensäure, Sorbinsäure, L-Ascorbinsäure und/oder Acetylsalicylsäure oder deren Derivate
mit mindestens einem Lebensmittel-Konservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetylsalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

Die einzelnen biologischen Bestandteile der erfindungsgemäßen Mittelkombination nach einem der Ansprüche 3 bis 6 bei eventueller Zugabe eines Oxidationsmittels nach den Ansprüchen 7 bis 9 und mit einem pH-Wert gemäß Anspruch 10 in einer Verdünnung in wässriger Lösung von 15 - 0,03 g Trockenmasse-Mittel, bevorzugt 10 - 0,1 g, insbesondere 8 - 0,1 g Trockenmasse-Mittel pro Liter Wasser oder auch in weit geringerer Kombination entkeimungswirksam angewandt werden, wobei das Mittel in wässriger Lösung einen sauren pH-Wert zwischen 2 und 7 aufweist.

Da das Mittel seine Entkeimungswirkung eine Zeit lang behält bzw. sich erst nach einiger Zeit voll verbraucht, ist eine zeitlich ausgedehnte Wirksamkeit gegeben, d.h. vorbeugend gegen später eintretende Verkeimung.

Zum Schutzumfang der Erfindung gehört daher auch, wenn das Mittel in entkeimend wirkender Konzentration einem Reinigungsmittel bzw. einer Reinigungsflüssigkeit wie beispielsweise Wischwasser zugegeben wird und damit auf die zu reinigenden Oberflächen übertragen wird und diese entkeimt bzw. bis zu seinem vollständigen biologischen Abbau keimfrei hält. Dabei behält das Mittel seine entkeimende Wirkung auch im angetrockneten Zustand bei, und zwar je nach Keimbefallsdruck sogar mindestens bis zu 2 bis 3 Monaten.

Bei der Verwendung des Mittels als Reinigungsmittel für Sanitärbereiche ergibt sich der besondere Vorteil, daß es aus dem Abwasser davon gleichzeitig entkeimend und gegen Biofoulingbildung in den Abwasserrohren wirkt, und zwar auf umweltschonende und biologisch völlig abbaubare Weise. Statt also die Kanalisation mit chemischen Restprodukten zu belasten, trägt es selbst im Abwasser zu dessen Entlastung bei.

Davon mit umfasst ist auch die entkeimende Reinigung von technischen Geräten wie z. B. von Biofouling verschmutzten Bestandteilen wie flüssigkeitsführende Schläuche und Rohre, wie z. B. Schläuche im medizinischen Bereich, aber auch Kühl- und Wärmeaustauscherrohre im technischen Bereich, bei denen selbst radikal wirkende anorganische Mittel, Chlor, aber auch Antibiotika unwirksam sind.

Es kann sich dabei um Arbeitsflächen privater oder gewerblicher Art, um Innenflächen von Rohren (z. B. Wasserrohren) oder Schläuchen (z. B. medizinischen Schläuchen) und auch luftführenden Kanälen (Klimaanlagen)oder Behältern, insbesondere wasserführenden Behältern oder Außenund Innenkonturen von Vorrichtungen (Filtern, Membranen, Pumpen, etc.) handeln, welche dadurch in ihrer Funktion beeinträchtigt bzw. außer Funktion gesetzt werden.

Eine Verkeimung derartiger Oberflächen führt zu den verschiedensten Nachteilen, wie z. B. Infektionen bzw. Weiterverbreitung der Verkeimung, ungünstigen Ablagerungen wie Biofouling und Kalkablagerungen und auch zu bakterienverursachtem Rost und zu Korrosionen, und zwar sowohl begünstigt durch Feuchtigkeitseinflüsse (z. B. Luftfeuchtigkeit), als auch in Kontakt mit Flüssigkeiten (Wasserbehälter, etc.) oder See- und Meerwasser, wobei sich die Keime auch in feinsten Mikroporen festsetzen und gegebenenfalls Biofouling-Ablagerungen bilden, innerhalb derer sich z. B. Bakterien und Pilze gegen zerstörende Einflüsse wie chemische oder mechanische Einwirkung schützen, so dass zumindest verbleibende Verkeimungsreste die Wiederausbildung der Keimschicht gewährleisten. Eine Biofouling-Schicht bleibt.

Insbesondere nichtmetallische Oberflächen wie z. B. aus Kunststoff oder Plastik sind selbst bei äußerst glatt erscheinender Oberfläche für das Eindringen und Festsetzen von Mikroorganismen, die z. B. eine Beschichtung wie mit Farbe durchdringen und darunter befindliches, metallisches Material angreifen können. Das gilt insbesondere für Eisen und Stahl, bei dem die Bakterien die Rostbildung zumindest auslösen, und zwar schon deshalb, weil viele Bakterien Eisenverbindungen (Fe₂O₃ und Fe₃O₄) zu ihrem Stoffwechsel verwerten und sich dadurch ernähren.

Das gilt ebenso für wasserführende Leitungen, in denen Rostansätze Ausgangspunkte für Kalkablagerungen bilden, wobei die aus Rost und Kalk kombinierten Rohrablagerungen durchsetzt mit Biofouling beste Speicherplätze für jede Art von Mikroorganismen bilden, so dass sich z. B. die Legionella-Bakterienarten in den Wasserleitungen alter Gebäude erhalten können.

Auch bei der Reinigung und Entkeimung der Oberfläche von Lebensmitteln wie z. B. Obst, Gemüse und Körnerfrüchten ist es nicht notwendig, das Behandlungsmittel vor dem Gebrauch wieder zu entfernen, weil es völlig untoxisch, nämlich in der Trinkwasserklasse 0 klassifiziert ist.

Zudem wirkt das Mittel auch in angetrocknetem Zustand und ist auch vorbeugend einsetzbar, z. B. auf Oberflächen von Pflanzenschnittstellen. Das gilt auch für sämtliche landwirtschaftlichen Produkte, auch Körner, Nüsse, Bananen und vor allem auch Trockenobst und dergleichen.

Um eine ausreichende Benetzung bzw. eine verringerte Oberflächenspannung des Mittels zu gewährleisten, kann bzw. können ihm ein oder mehrere Tenside nach Anspruch 11 zugegeben werden, das biologisch voll abbaubar ist.

Ganz generell ist der Schutzumfang des Mittels besonders in seiner organischen Verbindungszusammensetzung nach Anspruch 3 gegeben.

Wenn das Mittel in mikroverkapselter Form vorliegt, ist es einerseits leichter handhabbar und andererseits spontaner einwirkbar.

Es kann auch durch die Zugabe eines Silbersalzes nach Anspruch 12 eine auf noch verlängerte Zeit aktiv wirksame Entkeimung bzw. Keimreduzierung erreicht werden.

Um das Lösungsverhalten weiter günstig zu beeinflussen, kann es dafür sinnvoll sein, MgCl₂ einzusetzen, das durch Ionenaustausch mit anderen zweiwertigen Salzen die Lösung der Ablagerungen zweiwertiger Ionen fördert.

Dadurch, dass nun Citronensäure mit ihren günstigen Lösungseigenschaften gemeinsam mit Silberverbindungen, wie -salzen, die gegen ein Wachstum von Keimen eingesetzt werden, kann bei einer überraschend guten unabhängigen Entkeimungswirkung auch die Nachverkeimung herabgesetzt werden.

Alternativ kann auch noch ein Korrosionsschutzmittel nach Anspruch 14 und/oder ein Oberflächenschutzmittel gemäß Anspruch 13 sowie 15 vorgesehen sein.

Das Mittel ist nicht nur 100 %tig biologisch abbaubar, sondern auch vor allem stark bis vollständig gegen Geruchsbildung wirksam sowie haut- und sogar schleimhautschonend bzw. -verträglich und erlaubt auch keine Schwächung durch Resistenzerscheinungen. Auch allergische Reaktionen konnten nicht beobachtet werden.

Das Mittel wirkt gegen Keime wie Bakterien (bakterizid), Pilze wie Schimmelpilze (fungizid), Pilzsporen und Blütenstaub, Hefen, Protozoen, Eukaryoten, Eiweißmoleküle, Enzyme, Makrophagen und auch molekular-biologische Schädlinge oder dergleichen, niedrige Pflanzen wie Algen, sowie Protozoen (Einzeller), aber auch gegen Kleinlebewesen, Insekten, Milben, Parasiten durch Zerstörung deren Nachwuchs und Eier, sowie Biofouling und Epelithionbildung. Das Mittel ist darüberhinaus parasiten- und ungezieferabweisend, z. B. bei Ameisen, Fliegen, Mücken und dergleichen.

Konkret ist das erfindungsgemäße Mittel auch gegen sämtliche Arten von Aspergillus, Legionellen und Salmonellen, sowie
Escherichia coli,
Klebsielle pneumoniae,
Staphylococcus aureus,
Pseudomonas aeruginosa,
Streptococcus faecalis,
Proteus mirabilis,
Mycobacterium tuberculosis,
Clostridium sporogens,
Candida albicans
mit bis zu völliger Entkeimung erprobt.

## Patentansprüche

1. Mittel zur Entkeimung bzw. Keimreduzierung von Reinigungs- und Sanitär- bzw. Toilettenartikeln sowie kosmetischen Artikeln und dergleichen verkeimungsgefährdeten Gegenständen mit einem oder mehreren Lebensmittel-Konservierungsstoffen sowie mindestens einer nicht-toxischen, insbesondere organischen Säure.

2. Mittel nach Anspruch 1, welches mindestens eine Kombination einer oder mehrerer Verbindungen aus der Gruppe der Verbindungen Citronensäure, Sorbinsäure, L-Ascorbinsäure und/oder Acetylsalicylsäure oder deren Derivate aufweist
mit mindestens einem Lebensmittel-Konservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetylsalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

3. Mittel nach einem der Ansprüche 1 oder 2, gekennzeichnet durch 0,05 - 10 g, bevorzugt 0,2 - 6 g und besonders bevorzugt 0,3 - 4 g Natriumbenzoat und 0,1 - 10 g, bevorzugt 0,2 - 5 g und besonders bevorzugt 0,3 - 3 g Sorbinsäure.

4. Mittel nach einem der Ansprüche 2 oder 3, dadurch gekennzeichnet, dass die Citronensäure bis zu 1 bis 25 Gew.% ihrer Gesamtmenge durch L-Ascorbinsäure und/oder Acetylsalicylsäure ersetzt ist.

5. Mittel nach einem der vorhergehenden Ansprüche, dadurch gekennzeichnet, dass die organischen Säuren gesättigte oder ungesättigte Carbonsäuren mit 1-14 C-Atomen, bevorzugt 1-12 C-Atomen sind.

6. Mittel nach einem der Ansprüche 1 bis 5 in wässriger Lösung von 15 - 0,03 g Trockenmasse-Mittel, bevorzugt 10 - 0,1 g, insbesondere 8 - 0,1 g Trockenmasse-Mittel pro Liter Wasser.

7. Mittel nach einem der Ansprüche 1 bis 6, dadurch gekennzeichnet, dass es einen Anteil eines Oxidationsmittels wie eine Perverbindung aus z. B. einem Peroxid, wie Natrium-, Kalium-, Calcium- oder Wasserstoffperoxid oder einen Abkömmling einer Persäure wie Perborat, Perphosphat, Percarbonat oder eine stark oxidierende Verbindung wie ein Permanganat aufweist.

8. Mittel nach einem der Ansprüche 1 bis 7, dadurch gekennzeichnet, dass die Kombination von 50 bis 80 Gew.%, bevorzugt 55 bis 70 Gew.%, insbesondere 60 bis 65 Gew.% Citronensäure, 20 bis 50 Gew.%, bevorzugt 30 bis 45 Gew.%, insbesondere 35 bis 40 Gew.% einer festen Peroxoverbindung, sowie 0,3 bis 1 Gew.% eines Lebensmittel-Konservierungsstoffes aufweist, wobei die Summe aller Prozentsätze jeweils 100 ist.

9. Mittel nach einem der Ansprüche 6 und 7 mit 0,001 - 16 %, vorzugsweise 12 %, insbesondere 10 Vol.-% H₂O₂ pro Liter Wasser sowie gegebenenfalls Stabilisatoren für die Peroxidverbindung.

10. Mittel nach einem der vorhergehenden Ansprüche 1 bis 9, dadurch gekennzeichnet, dass die Lösung einen sauren PH-Wert zwischen etwa 2 und 7 aufweist.

11. Mittel, insbesondere nach einem der vorhergehenden Ansprüche, gekennzeichnet durch 0,1 bis 5 % eines oder mehrere Tenside, ausgewählt aus der Gruppe bestehend aus in der verwendeten Menge untoxischen anionischen und nichtionischen Tensiden, Seifen, Fettsäure-Aminocarbonsäurekondensate, Alkylbenzolsulfonate, Ligninsulfonate, Alkylsulfonate, Fettsäureestern, sulfatierten Fettsäureglyceriden, Betaine, Sulfobetaine, Saponine, Fettsäureester von Polyalkoholen, Oxyäthylierte Fettsäuren, etc., und insbesondere Natriumdodecylsulfonat und Natriumlaurylsulfat.

12. Mittel nach einem der vorhergehenden Ansprüche 1 bis 11, dadurch gekennzeichnet, dass ihm eine wasserlösliches Silbersalz in einem Anteil von vorzugsweise weniger als 0,2 % der Trockenmasse zugesetzt ist.

13. Mittel nach einem der vorhergehenden Ansprüche 1 bis 12, dadurch gekennzeichnet, dass ihm ein Oberflächenschutzmittel wie z. B. Wachs beigefügt ist.

14. Mittel nach einem der vorhergehenden Ansprüche 1 bis 12, dadurch gekennzeichnet, dass ihm ein Korrosionsschutzmittel beigefügt ist.

15. Mittel nach einem der vorhergehenden Ansprüche, dadurch gekennzeichnet, dass ihm ein Entfettungsmittel zugegeben ist.

16. Mittel nach einem der vorhergehenden Ansprüche, dadurch gekennzeichnet, dass es in mikroverkapselter Form vorliegt.

17. Mit dem Mittel nach einem der vorhergehenden Ansprüche behandelte einkeimte bzw. keimreduzierte Reinigungs-, Sanitär- und Toilettenartikel sowie Körperpflegeartikel und kosmetische Artikel und dergleichen verkeimungsgefährdete Gegenstände.

18. Verwendung des Mittels nach einem der vorhergehenden Ansprüche 1 bis 17 als Reinigungsmittel auch in wässriger Lösung für Oberflächen jeglicher Art, auch zur Raumreinigung, zum Schutz gegen Verkeimung.

19. Verwendung des Mittels nach einem der vorhergehenden Ansprüche 1 bis 17 zur Entkeimung von Geräten auf dem Gebiet verderblicher Waren.

20. Verwendung des Mittels zum Entfernen und gegen Bildung von Biofouling an und in Schiffen.
